(19) Europäisches Patentamt
European Patent Office
Office européen des brevets

(11) **EP 2 823 339 B1**

(12) **FASCICULE DE BREVET EUROPEEN**

(45) Date de publication et mention
de la délivrance du brevet:
**16.01.2019 Bulletin 2019/03**

(21) Numéro de dépôt: **13707651.9**

(22) Date de dépôt: **06.03.2013**

(51) Int Cl.:
***G01V 15/00*** *(2006.01)*

(86) Numéro de dépôt international:
**PCT/EP2013/054534**

(87) Numéro de publication internationale:
**WO 2013/131975 (12.09.2013 Gazette 2013/37)**

(54) **DISPOSITIF DE LOCALISATION POUR L'EVALUATION DE LA DISTANCE ENTRE UNE ETIQUETTE RFID ET UNE INTERFACE**

ORTUNGSVORRICHTUNG ZUR BEURTEILUNG DES ABSTANDS ZWISCHEN EINEM RFID-ETIKETT UND EINER GRENZFLÄCHE

LOCATING DEVICE FOR EVALUATING THE DISTANCE BETWEEN AN RFID LABEL AND AN INTERFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2012 FR 1252081**

(43) Date de publication de la demande:
**14.01.2015 Bulletin 2015/03**

(73) Titulaire: **Commissariat à l'Énergie Atomique et aux Énergies Alternatives
75015 Paris (FR)**

(72) Inventeurs:
• **THOMAS, Thierry
F-38760 Varces Allieres et Risset (FR)**
• **FRASSATI, François
F-38340 Voreppe (FR)**

(74) Mandataire: **GIE Innovation Competence Group
310, avenue Berthelot
69372 Lyon Cedex 08 (FR)**

(56) Documents cités:
JP-A- 2005 181 111     US-A1- 2007 290 846
US-A1- 2011 181 289

**Description**

L'invention concerne la localisation d'objets enfouis, immergés ou non accessibles, et en particulier la localisation d'objets en activant des étiquettes de type RFID attachées à ces objets. L'invention s'avère plus particulièrement avantageuse pour la localisation de canalisations en plastique.

La localisation d'objets enterrés ou immergés est souvent délicate pour des personnes se trouvant en surface. Une telle localisation s'avère notamment nécessaire en vue de réaliser des travaux, soit pour accéder à des canalisations d'eau ou de gaz, soit pour éviter de les détériorer, soit pour tenir à jour des plans de réseau. Une localisation en se basant uniquement sur des plans réalisés au moment du positionnement des canalisations s'avère le plus souvent inutilisable du fait d'un manque de fiabilité des plans, du fait d'une perte de ces plans, ou du fait d'un déplacement incontrôlé des canalisations (par exemple à la suite de mouvements de terrain ou de travaux de terrassement).

Du fait de l'absence d'accès direct à de telles canalisations, un certain nombre de méthodes ont été mises au point pour faciliter leur localisation effective depuis la surface. Une méthode de localisation connue consiste notamment à fixer au préalable des étiquettes RFID à des canalisations en des emplacements stratégiques, puis à localiser ultérieurement ces étiquettes depuis la surface en utilisant un lecteur associé à ces étiquettes.

En déterminant la position horizontale et la profondeur des différentes étiquettes, on peut notamment reconstruire en trois dimensions un réseau souterrain de canalisations. La présence d'étiquettes en des points singuliers du réseau (par exemple au niveau des branchements ou des virages des canalisations) facilite la reconstruction de son plan.

Plusieurs modes de communication sont connus entre un lecteur et une étiquette RFID. Dans de tels systèmes, on établit un lien par champ magnétique radiofréquence entre le lecteur et une ou plusieurs étiquettes.

Les antennes de type antennes rayonnantes hautes fréquences et ultra hautes fréquences, dont la taille est de l'ordre de la demie longueur d'onde de la fréquence de communication, sont sensibles à la fois à la composante de champ magnétique et à la composante de champ électrique. La communication entre le lecteur est très dépendante de la structure des antennes de l'étiquette et du lecteur. De plus, compte tenu des distances mises en jeu supérieures à la longueur d'onde du champ électromagnétique et des caractéristiques électromagnétiques du milieu dans lequel l'étiquette est enfouie, les ultra hautes fréquences conduisent à des diagrammes de champ électromagnétique plus complexes et plus susceptibles d'être perturbés. L'humidité du milieu induit en outre une absorption accrue des ondes. La fiabilité de la localisation est ainsi sérieusement affectée.

Du fait de ces limitations, l'utilisation d'antennes de type inductives est favorisée pour de telles applications. La communication entre un lecteur et des étiquettes RFID est par exemple définie dans les normes ISO15693 et ISO18000-3 pour la fréquence de 13,56 MHz.

Dans le cas d'antennes inductives, les interactions entre l'antenne du lecteur et l'antenne de l'étiquette peuvent être décrites par des équations de couplage inductif (avec une approche quasi-statique et l'utilisation du calcul de mutuelles inductances). Le couplage inductif induit le transfert d'énergie entre le lecteur et l'étiquette par inductance mutuelle.

Un circuit conducteur bobiné de l'étiquette, prélève au travers de sa surface le flux du champ magnétique produit par l'antenne du lecteur. La variation temporelle de ce flux crée une tension induite dite f.e.m (pour force électro motrice) au sein de ce circuit bobiné. Cette tension est redressée et généralement utilisée pour alimenter les fonctions de l'étiquette.

Le circuit bobiné de l'antenne présente une inductance. Cette inductance est mise à profit en l'associant à un élément capacitif ajouté pour former un résonateur parallèle. La tension disponible aux bornes de ce résonateur est alors le produit de la tension induite par le coefficient de surtension (correspondant globalement au coefficient de qualité du résonateur) permettant ainsi l'alimentation d'un circuit intégré de l'étiquette. L'alimentation à distance d'un circuit intégré d'une étiquette RFID d'identification nécessite une tension (et une puissance) minimale pour fonctionner, typiquement de l'ordre de quelques volts crêtes et quelques centaines de microwatts. Il existe ainsi une valeur minimale de champ magnétique appliquée à l'antenne de l'étiquette à partir de laquelle l'étiquette est fonctionnelle et peut répondre aux sollicitations du lecteur.

Pour permettre la transmission de données de l'étiquette vers le lecteur, l'étiquette modifie l'impédance qu'elle présente aux bornes du circuit d'antenne. Cette variation d'impédance est détectée par le lecteur du fait du couplage inductif.

Un certain nombre de procédés de détection sont connus, dans lesquels un manipulateur utilise un lecteur RFID pour obtenir la localisation des étiquettes RFID souterraines.

On entend par zone de détection le volume (ou par extension la surface au sol) dans lequel une étiquette RFID est lisible par le lecteur. La communication avec l'étiquette est possible si le centre de l'antenne du lecteur est à l'intérieur du volume et non possible si le centre de l'antenne est à l'extérieur de ce volume. La géométrie de la zone de détection (forme et dimension) dépend des caractéristiques de l'étiquette (positionnement et sensibilité) et des caractéristiques de l'antenne du lecteur, ainsi que du niveau de champ magnétique produit par cette antenne.

Dans le brevet JP2005181111, des étiquettes RFID sont fixées sur des canalisations enterrées. Le lecteur localise l'étiquette en communiquant avec celle-ci lorsqu'il se trouve dans la zone de détection. Pour cela, le lecteur récupère une information de profondeur ayant été mémorisée au préalable dans l'étiquette. Le lecteur détermine le positionnement horizontal de l'étiquette de façon approximative, en se basant sur le fait que le lecteur est disposé dans la zone de détection.

Un tel procédé de localisation s'avère relativement peu précis concernant le positionnement horizontal et ne permet pas de déterminer la profondeur effective de l'étiquette. Ainsi, l'information de profondeur récupérée s'avère inexacte dans le cas d'un remaniement de la surface du sol ou d'un déplacement de la canalisation sous l'effet de différents événements, une telle variation s'avérant relativement probable pour des canalisations dont la durée de vie est fréquemment comprise entre 30 et 50 ans.

Un autre procédé de localisation connu est basé sur la communication entre un lecteur et une étiquette RFID basse fréquence (entre 80 et 120 kHz) et l'utilisation d'antennes de type inductives sont favorisées pour de telles applications. Les basses fréquences correspondent à des longueurs d'onde bien supérieures aux distances de localisation. Un tel procédé est fréquemment mis en oeuvre avec des étiquettes munies de simples résonateurs et dépourvues de puces électroniques. Le résonateur de l'étiquette crée un champ magnétique secondaire proportionnel au champ magnétique primaire créé par l'antenne du lecteur.

La croissance et la décroissance de l'amplitude du champ secondaire s'effectuent suivant une constante de temps dépendant du facteur de qualité du résonateur. L'amplitude du champ secondaire mesurée par le lecteur est relativement faible par rapport à l'amplitude du champ primaire. Afin de permettre la mesure du champ secondaire, le champ primaire n'est émis que brièvement et la mesure du champ secondaire est effectuée durant les périodes d'extinction du champ primaire. Pour que l'amplitude du champ secondaire soit encore significative suffisamment longtemps durant les périodes d'extinction du champ primaire, le résonateur de l'étiquette présente un facteur de qualité suffisamment élevé (typiquement compris entre 50 et 100).

La position horizontale ou l'aplomb de l'étiquette est déterminée en balayant la surface du sol avec le lecteur. La position horizontale de l'étiquette est identifiée lorsque l'amplitude du champ secondaire atteint un maximum.

Des étiquettes munies d'un résonateur simple n'étant pas aptes à renseigner le lecteur sur leur configuration, le lecteur doit en outre résoudre un problème à deux inconnues : l'intensité d'émission du champ magnétique secondaire et la profondeur de l'étiquette. Pour déterminer ces deux inconnues, le manipulateur place le lecteur à l'aplomb de l'étiquette, et effectue deux mesures à deux hauteurs prédéfinies au-dessus du sol.

Afin de garantir la précision de mesure du champ secondaire, celui-ci est mesuré de façon répétée et une moyenne est calculée sur les différentes valeurs mesurées. Cependant, du fait des faibles valeurs de fréquence de communication utilisées, la durée nécessaire pour réaliser les mesures de champ secondaire s'avère en pratique relativement longue pour l'opérateur, typiquement de plusieurs secondes. Une fois à l'aplomb de l'étiquette, cette durée de mesure est dédoublée pour mesurer le champ secondaire aux deux hauteurs prédéfinies. Pour ne pas rendre la localisation excessivement longue, la détermination de l'aplomb de l'étiquette doit également être réalisée en se contentant d'une localisation approximative du lieu pour lequel le champ secondaire fournit une amplitude maximale. De plus, la précision d'un tel procédé s'avère relativement dépendante des perturbations magnétiques externes dans des fréquences approchantes (par exemple dues à l'excitation d'autres sources secondaires), l'amplitude du champ secondaire mesurée sur le lecteur restant très réduite.

L'invention vise à résoudre un ou plusieurs de ces inconvénients. L'invention porte ainsi sur un dispositif de localisation évaluant une distance d'une étiquette RFID par rapport à une interface entre deux milieux, l'étiquette étant disposée du côté opposé au dispositif de localisation par rapport à l'interface. Le dispositif est défini dans les revendications annexées.

L'invention porte également sur un procédé de localisation d'une étiquette RFID par rapport à une interface entre deux milieux, l'étiquette étant disposée du côté opposé à un dispositif de localisation par rapport à l'interface, défini dans les revendications annexées.

Le document US2007/0290846 décrit un dispositif pour déterminer la position d'un transpondeur par rapport à un lecteur, dans un milieu continu. À partir de différents champs magnétiques successifs générés par le lecteur, la distance entre le lecteur et le transpondeur est évaluée.

Le document US2011/0181289 décrit un dispositif de détection d'un objet enterré. Un capteur mesure l'amplitude du champ magnétique de l'objet enterré. Un dispositif de contrôle permet par ailleurs de déterminer l'identification de l'objet. La distance entre le dispositif de détection et le sol est déterminée par différents moyens.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'une canalisation souterraine munie d'étiquettes RFID devant être localisée ;
- la figure 2 est une représentation schématique d'une phase de localisation d'une étiquette RFID et de différents paramètres mis en jeu ;

- la figure 3 est une représentation électrique équivalente de l'association d'un lecteur et d'une étiquette RFID de types inductifs mis en oeuvre dans un mode de réalisation d'un dispositif de localisation selon l'invention ;

- la figure 4 est un schéma bloc d'un dispositif de localisation selon un mode de réalisation de l'invention ;

- la figure 5 est un diagramme d'un niveau de champ électromagnétique généré par une antenne pour différentes distances limites de détection ;

- la figure 6 est un diagramme illustrant différentes courbes de champ électromagnétique au niveau de l'étiquette en fonction de la distance de l'étiquette à une interface.

La localisation d'une étiquette selon l'invention est basée sur la détermination de différentes valeurs de champ électromagnétique minimales de détection de l'étiquette, en fonction de différentes positions d'un dispositif de localisation générant ce champ électromagnétique.

L'invention fournit une solution de localisation d'étiquettes RFID présentant une grande précision avec une manipulation aisée. Cette localisation peut être indépendante de l'évolution des performances de l'étiquette, par exemple liée à son vieillissement.

Cette solution de localisation est suffisamment discriminante par rapport à d'autres sources de champ secondaire ou d'autres étiquettes RFID éventuelles. En outre, cette solution est particulièrement aisée à mettre en oeuvre pour des manipulateurs dans des conditions réelles. Par ailleurs, l'invention permet de réaliser une localisation même en présence d'obstacles au sol, induisant un espace relativement réduit pour réaliser des mesures.

La description va par la suite décrire une localisation horizontale d'une étiquette suivie de la localisation de sa profondeur par rapport à une surface horizontale. Cependant, l'invention s'applique également à l'évaluation de la distance entre une étiquette et une interface non horizontale. L'interface assure une séparation entre deux milieux, l'étiquette et un dispositif étant disposés de part et d'autre de l'interface. Le dispositif de localisation décrit par la suite présente ainsi :

- une fonction de détermination de la position par rapport à une interface sensiblement plane, en projection sur cette interface selon sa normale ;

- une fonction d'évaluation de la distance entre l'étiquette et l'interface.

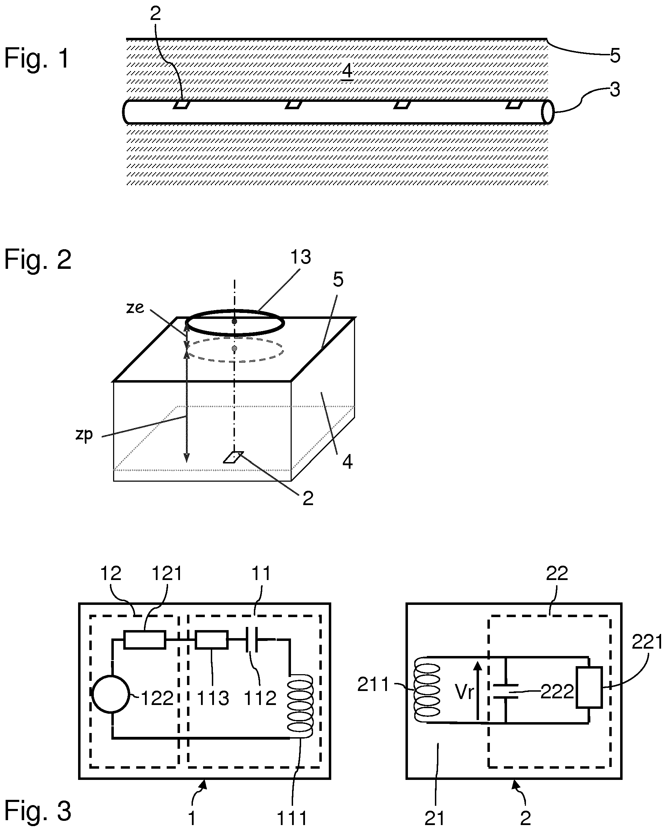

L'invention peut typiquement être appliquée à la localisation de canalisations souterraines. La figure 1 illustre de façon schématique une canalisation souterraine 3 enterrée dans un milieu souterrain 4, tel que de la terre. La surface supérieure de la terre 4 forme une interface 5 entre deux milieux, en l'occurrence de natures différentes, à savoir la terre 4 et l'air. Des transpondeurs ou étiquettes RFID 2 sont fixés en des endroits appropriés sur la canalisation 3, par exemple à intervalles réguliers, au niveau d'embranchements ou de coudes réalisés dans la canalisation 3. Pour une telle application, on utilisera des étiquettes 2 aptes à fonctionner sous terre ou dans un milieu humide.

La figure 2 représente le positionnement d'une antenne 13 d'un dispositif pour la localisation de l'étiquette 2 enterrée dans le sol 4. L'antenne 13 est ici localisée à l'aplomb de l'étiquette 2. Ze correspond à la distance entre l'antenne 13 et le sol 5, tandis que zp correspond à la distance entre le sol 5 et l'étiquette 2. Le dispositif de localisation décrit par la suite vise notamment à évaluer cette distance zp et/ou la position d'aplomb de l'étiquette 2.

La localisation d'une étiquette selon l'invention est basée sur la détermination de différentes valeurs de champ électromagnétique minimales de détection de l'étiquette, en fonction de différentes positions de l'antenne du dispositif de localisation générant ce champ électromagnétique.

Le dispositif de localisation selon un mode de réalisation de l'invention inclut un dispositif de détection d'une réponse de l'étiquette 2. Dans ce mode de réalisation, le dispositif de détection est mis en oeuvre sous la forme d'un lecteur RFID 1.

La figure 3 fournit un exemple schématique de la représentation électrique conventionnelle du lecteur 1 et de l'étiquette RFID 2 sans contact à couplage inductif que l'on souhaite localiser.

Côté lecteur RFID 1, le circuit d'antenne 11 peut être modélisé par une inductance équivalente d'antenne 111, en série avec une résistance 113 et une capacité 112. Le circuit d'antenne 11 est connecté à un circuit électronique 12 du lecteur 1. L'impédance de sortie du lecteur RFID 1 peut être modélisée par une résistance 121, connectée en série avec le circuit d'antenne 11 et une alimentation 122.

Côté étiquette 2, le circuit d'antenne 21 peut être modélisé par une inductance équivalente 211. Le circuit d'antenne 21 est connecté à un circuit électronique 22. Le circuit électronique 22 contient une capacité 222. La consommation électrique de ce circuit électronique peut être modélisée par une résistance 221 connectée en parallèle à l'inductance équivalente 211.

Le couplage inductif induit le transfert d'énergie entre le lecteur et l'étiquette par inductance mutuelle. Une tension alternative ou force électromotrice est ainsi induite dans l'étiquette 2. Cette tension est redressée et utilisée pour alimenter les fonctions de l'étiquette 2. La tension disponible aux bornes de ce résonateur est alors le produit de la tension induite par le coefficient de surtension (correspondant globalement au coefficient de qualité du résonateur) permettant ainsi l'alimentation d'un circuit intégré de l'étiquette 2. L'alimentation à distance du circuit intégré de l'étiquette 2 nécessite une tension minimale pour fonctionner, typiquement de l'ordre de quelques volts crêtes. Il existe ainsi une valeur minimale de champ magnétique appliquée à l'antenne de l'étiquette 2 à partir de laquelle l'étiquette est fonctionnelle et peut répondre aux sollicitations du lecteur.

Des préconisations de conception de systèmes RFID de type inductif sont notamment définies dans les normes ISO 15693, ISO 18000-3 et ISO 14443. Ces normes fixent notamment la fréquence de la porteuse du signal à 13,56 MHz. Pour permettre la transmission de données de l'étiquette 2 vers le lecteur RFID 1, l'étiquette modifie de façon connue en soi l'impédance qu'il présente aux bornes du circuit d'antenne. Cette variation d'impédance est détectée par le lecteur du fait du couplage inductif. Le lecteur 1 est ainsi configuré pour détecter une réponse ou une absence de réponse de l'étiquette 2.

Durant la localisation de l'étiquette 2, le lecteur 1 cherche de façon périodique à détecter une réponse de l'étiquette 2. A intervalles réguliers, le champ radiofréquence du lecteur 1 est activé en excitant son antenne avec une tension sinusoïdale à sa fréquence de résonance pour une durée prédéterminée. Pendant la durée de l'activation, le lecteur émet plusieurs requêtes de manière récurrente selon un protocole standardisé. Suite à ces requêtes, le lecteur 1 maintient son champ activé pour détecter une éventuelle réponse de l'étiquette 2.

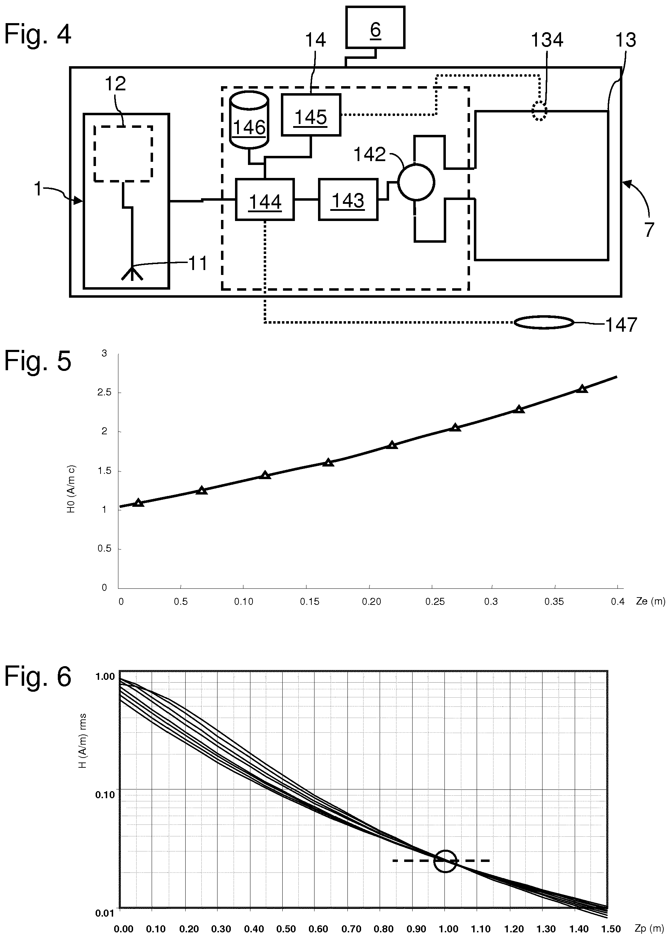

La figure 4 est un schéma bloc d'un dispositif 7 de localisation d'une étiquette RFID, selon un mode de réalisation de l'invention. Le dispositif 7 inclut un lecteur 1 tel qu'illustré à la figure 1, l'antenne 13 et un circuit de supervision 14.

L'antenne 13 est du type à couplage inductif. L'antenne 13 est avantageusement optimisée pour un fonctionnement à la surface du sol (avec un faible effet de sol). L'antenne 13 peut être de tout type approprié, par exemple tel que décrit dans le document FR2961354. L'antenne présente sensiblement une forme de boucle, rectangulaire ou circulaire. L'antenne 13 est avantageusement munie d'une sonde de courant 134.

Le circuit de supervision 14 comporte une alimentation 142 connectée aux bornes de l'antenne 13. Un circuit de commande 143 définit la puissance électrique appliquée par l'alimentation 142 sur le circuit d'antenne 13, et par conséquent l'amplitude du champ électromagnétique généré par ce circuit d'antenne. Le circuit de supervision 14 comporte également un circuit de traitement 144 et un circuit de mesure 145. Le circuit de mesure 145 récupère les mesures de la sonde de courant 134. Bien que les fonctions des circuits 143, 144 et 145 soit illustrées indépendamment, plusieurs de ces fonctions peuvent bien entendu être mises en oeuvre par un unique circuit intégré. Le dispositif 7 comprend en outre une mémoire 146.

Le dispositif 7 comprend un capteur 147 de la distance entre l'antenne 13 et l'interface 5 entre les deux milieux, en l'occurrence un capteur indiquant la distance ze entre l'antenne 13 et le sol 5. Un tel capteur 147 est connu en soi et peut-être un capteur optique (par exemple basé sur un faisceau laser), acoustique (par exemple de type sonar) ou radio (de type radar). Le dispositif 7 peut également être muni d'un niveau permettant au manipulateur de vérifier l'horizontalité de l'antenne 13 durant la localisation. Le capteur 147 est connecté au circuit de traitement 144. Le dispositif 7 inclut ou est connecté à un afficheur 6 fournissant notamment la valeur de la distance zp au manipulateur, et le cas échéant des instructions à exécuter par le manipulateur.

En alternative, le dispositif 7 peut être dépourvu de capteur de mesure de la distance ze entre l'antenne 13 et le sol 5. Le dispositif 7 peut alors déterminer cette distance ze par d'autres moyens. Le dispositif ze peut par exemple requérir du manipulateur qu'il place le dispositif 7 à une distance donnée du sol par l'intermédiaire de l'afficheur 6. Le manipulateur peut alors placer le dispositif 7 à la distance requise, en interposant par exemple des cales d'épaisseur calibrées entre le dispositif 7 et le sol 5, ou en utilisant un trépied à hauteur réglable sur lequel le dispositif 7 peut être fixé et comportant des graduations indiquant la distance entre le dispositif 7 et le sol 5 pour un réglage donné. L'utilisateur pourra confirmer que le dispositif 7 est à la bonne distance en appuyant sur un bouton approprié, de sorte que le dispositif 7 puisse déterminer qu'il est positionné à la distance requise du sol 5.

Le dispositif 7 comprend avantageusement un capteur du niveau de champ sur l'antenne 13. Un tel capteur permet de relever le niveau effectif du champ électromagnétique produit par l'antenne 13 pour pouvoir tenir compte d'éventuelles fluctuations de l'impédance de cette antenne 13 et du niveau de puissance fourni par l'alimentation 142 sur cette antenne 13. Comme dans l'exemple illustré, ce capteur peut être mis en oeuvre sous la forme d'une sonde de courant 134 mesurant le courant traversant l'antenne 13.

Le principe de la localisation de l'étiquette 2 par le dispositif 7 selon l'invention repose sur la propriété que l'étiquette 2 devient fonctionnelle et émet une réponse à partir d'un seuil de champ électromagnétique (pour une pulsation $\omega$) appliqué sur son antenne (Hs). Ce seuil est une valeur moyenne, appliquée perpendiculairement à la surface de l'antenne de l'étiquette 2, qui génère une tension induite (f.e.m) dans ce circuit d'antenne suffisante pour qu'un circuit 22 de l'étiquette soit alimenté par une tension minimale Vps le rendant fonctionnel, compte tenu de la fonction de transfert du résonateur équivalent (caractérisé par un facteur de qualité Q et une pulsation d'accord $\omega 0$).

$$V_{ps} \approx \cdot \frac{-Q \cdot \frac{\omega_o}{\omega}}{\left(1 + j \cdot Q \cdot \left(\frac{\omega}{\omega_o} - \frac{\omega_o}{\omega}\right)\right)} \cdot f.e.m = \frac{-Q \cdot \frac{\omega_o}{\omega}}{\left(1 + j \cdot Q \cdot \left(\frac{\omega}{\omega_o} - \frac{\omega_o}{\omega}\right)\right)} \cdot \left(\mu_o \cdot \omega \cdot S \cdot H_s\right)$$

S est la section du circuit d'antenne de l'étiquette 2 traversée par le flux électromagnétique.

A titre d'exemple, cette tension Vps est typiquement de l'ordre de quelques volts efficaces. La valeur Hs est typiquement de l'ordre de quelques dizaines à quelques centaines de mA/m efficaces, en fonction des caractéristiques de l'antenne de l'étiquette.

Par la suite, on supposera que cette valeur Hs du champ électromagnétique est constante durant toute la procédure de localisation de l'étiquette 2, sans pour autant nécessiter qu'elle soit connue par avance.

Lors d'une première phase, on détermine l'aplomb de l'étiquette 2 à la surface 5. Lorsqu'une étiquette 2 est correctement orientée, (plan de son antenne à l'horizontale) et que celle-ci n'est pas perturbée par un objet conducteur de grande dimension dans le sol 4, la zone de détection de l'étiquette 2 est généralement une ellipse.

Pour mettre en oeuvre cette phase, le circuit de commande 143 peut commander l'application initiale d'une puissance élevée ou maximale par l'alimentation 142. Dès que le circuit de traitement 144 détecte une réponse de l'étiquette 2, il détermine que l'antenne 13 se trouve dans la zone de détection de l'étiquette 2 pour cette puissance. Cette information peut être restituée au manipulateur par l'intermédiaire de l'afficheur 6. Le circuit de commande 143 commande ensuite l'application d'un niveau de puissance inférieur et indique au manipulateur qu'une recherche plus précise de l'aplomb est en cours. Le manipulateur est amené à déplacer horizontalement le dispositif 7 jusqu'à le placer dans une zone de détection plus réduite de l'étiquette 2. Dès que le circuit de traitement 144 détecte une réponse de l'étiquette 2 pour la puissance inférieure, il détermine que l'antenne 13 se trouve dans la zone de détection de l'étiquette 2 et fournit cette information au manipulateur. En répétant ces phases de diminution de puissance, le dispositif 7 peut réduire la zone de détection de l'étiquette 2 à une surface au sol relativement réduite (typiquement de 50 x 50 mm). Le circuit de traitement 144 mémorise la valeur minimale P0 pour laquelle il détecte encore une réponse de l'étiquette 2. L'aplomb de l'étiquette 2 peut ainsi être déterminé avec une grande précision, en outre sans nécessiter de calculs.

Lors d'une deuxième phase, on détermine la distance zp de l'étiquette 2 au sol 5 à cet aplomb, en déterminant la puissance minimale d'émission de l'antenne 13 pour laquelle l'étiquette 2 est détectée, pour différentes distances ze du dispositif 7 au dessus de l'aplomb de l'étiquette 2.

Selon une première variante, le manipulateur est supposé poser l'antenne 13 contre le sol 5 (une consigne peut lui être fournie à cet effet par l'intermédiaire de l'afficheur 6) à l'aplomb déterminé pour l'étiquette 2 pour une première série de mesures. Puis le manipulateur est invité à relever l'antenne 13 à différentes distances ze au-dessus du sol pour de nouvelles séries de mesures. Le circuit de traitement 144 peut par exemple inviter le manipulateur à relever l'antenne 13 par incréments de 50mm, par exemple par l'intermédiaire de l'afficheur 6. Le circuit de traitement 144 peut inviter le manipulateur à relever l'antenne et lui indiquer de maintenir cette antenne 13 à cette distance ze pendant la durée de la mesure, le circuit de traitement 144 déterminant cette distance de l'antenne 13 par l'intermédiaire du capteur 147 ou par validation de cette distance par l'utilisateur par l'intermédiaire d'une interface appropriée.

Pour différentes distances ze, le circuit de commande 143 commande ainsi l'application de différentes puissances par l'alimentation 142 sur l'antenne 13, ces différentes puissances étant supérieures à la valeur P0 mémorisée. Les différentes valeurs de puissance peuvent être appliquées sous forme de séquences répétitives de requêtes/réponses définies dans un protocole de communication RFID. Pour chaque distance ze, le circuit de traitement 144 détermine quelle est la puissance minimale de l'alimentation 142 pour laquelle une réponse de l'étiquette 2 est obtenue, en constatant qu'à partir d'une certaine puissance, aucune réponse de l'étiquette 2 n'est obtenue.

Pour chacune des distances ze mesurée, le circuit de traitement 144 mémorise une valeur de champ électromagnétique mesurée sur l'antenne 13 pour cette puissance minimale. Pour chacune des distances ze mesurées, le circuit de traitement 144 mémorise ainsi une mesure dans la mémoire 146, sous la forme de couple Ek=(zek ; Hk), k étant l'indice d'une mesure, zek étant la valeur de la distance ze correspondante, et Hk étant l'amplitude du champ sur l'antenne 13 mesuré à cette distance zek pour la puissance minimale de détection.

Selon une deuxième variante, le manipulateur est supposé poser l'antenne 13 contre le sol 5 (une consigne peut lui être fournie à cet effet par l'intermédiaire de l'afficheur 6) à l'aplomb déterminé pour l'étiquette 2. Le circuit de traitement 144 lance alors une séquence répétitive de requêtes/réponses afin de déterminer la distance ze limite de détection à différents niveaux de puissance. Le manipulateur est invité à effectuer un geste lent de levage de l'antenne jusqu'à une distance d, avec dmin < d, dmin étant fixée par la précision d'estimation souhaitée de la distance entre l'étiquette 2 et le sol 5.

Dans cette variante, la puissance appliquée par l'alimentation 142 sur l'antenne 13 débute à une valeur au moins égale à la valeur P0 mémorisée puis est augmentée à différents niveaux discrets. Lorsque le manipulateur relève l'antenne 13, le circuit de traitement 144 détermine jusqu'à quelle distance zek la puissance Pk appliquée sur l'antenne permet d'obtenir une réponse de l'étiquette 2. Lorsqu'une rupture de détection de l'étiquette 2 est déterminée, la puissance de l'alimentation 142 est incrémentée à $P_{k+1}$ pour déterminer la distance $ze_{k+1}$.

Pour chacune des distances zek limites déterminées, le circuit de traitement 144 mémorise ainsi une mesure dans la mémoire 146, sous la forme de couple Ek=(zek ; Hk).

Pour confirmer chaque distance zek limite de détection, une distance limite de détection peut être invalidée : lorsqu'une distance limite est identifiée, la séquence de recherche se poursuit transitoirement avec la même puissance pour vérifier que l'étiquette 2 n'est pas détectée à une distance ze supérieure. Une distance limite zek sera validée si elle n'est pas suivie d'une autre distance ze supérieure de détection pour cette puissance.

Selon une troisième variante, le manipulateur est supposé poser l'antenne 13 contre le sol 5 à l'aplomb déterminé par l'étiquette 2. Le circuit de traitement 144 lance alors une séquence répétitive de questions/réponses afin de déterminer la distance ze limite de détection à différents niveaux de puissance. Le manipulateur est invité à effectuer un geste lent de levage de l'antenne jusqu'à une distance d, avec dmin < d, dmin étant fixée par la précision d'estimation souhaitée de la distance zp entre l'étiquette 2 et le sol 5.

Dans cette variante, la puissance appliquée par l'alimentation 142 sur l'antenne 13 débute à une valeur au moins égale à la valeur P0 mémorisée. Lorsque l'antenne 13 est relevée avec ce niveau de puissance et que plusieurs requêtes/réponses aboutissent à une non détection de l'étiquette 2, le circuit de commande 143 commande l'application d'une rampe de puissance ascendante.

Pour chacune des distances ze limites déterminées lors d'une rampe de puissance ascendante, le circuit de traitement 144 mémorise ainsi une mesure dans la mémoire 146, sous la forme de couple Fk=(zek ; Hk).

Si plusieurs requêtes/réponses successives aboutissent à une détection de l'étiquette 2, le circuit de commande 143 commande l'application d'une rampe de puissance descendante. Lors de l'application d'une rampe de puissance descendante, le circuit de traitement 144 détermine une distance ze et une puissance limites correspondant à une limite de détection de l'étiquette 2. Lorsqu'une distance ze et une puissance limites sont déterminées, une nouvelle rampe de puissance ascendante est à nouveau appliquée sur l'antenne 13.

Afin de confirmer que la puissance et la distance mesurées correspondent bien à une limite de détection, la rampe descendante est poursuivie transitoirement pour vérifier qu'une nouvelle détection n'intervient pas pour une puissance inférieure et une distance ze supérieure.

Pour chacune des distances ze limites déterminées lors d'une rampe de puissance descendante, le circuit de traitement 144 mémorise ainsi une mesure dans la mémoire 146, sous la forme de couple Ek=(zek ; Hk).

La vitesse des rampes ascendantes et descendantes sera suffisamment rapide pour que le mouvement d'élévation de l'antenne 13 ne puisse pas contrecarrer la diminution de l'amplitude du champ de l'étiquette 2 au niveau de cette antenne 13.

La distinction entre les mesures Ek et Fk permet de tenir compte de seuils de détection potentiellement légèrement différents lors d'un passage d'un état détection vers non détection par rapport à un passage d'un état de non détection vers détection (phénomène d'hystérésis sur les seuils). Un premier calcul de la distance zp pourra alors être réalisé sur la base des mesures Ek et un deuxième calcul de la distance zp pourra être réalisé sur la base des mesures Fk. La distance zp retenue pourra être la moyenne des valeurs obtenues par ces deux calculs.

Pour ces variantes, la distance maximale d'élévation de l'antenne 13 peut être fixée soit par une valeur ergonomique (par exemple 400 ou 500 mm au-dessus du sol), soit par une distance pour laquelle le champ généré par l'antenne 13 n'est plus suffisante pour détecter une réponse de l'étiquette 2.

Avantageusement, le niveau de puissance fourni par l'alimentation 142 à l'antenne 13 est asservi à une valeur de courant traversant l'antenne 13 et mesurée par la sonde de courant 134. L'alimentation 142 peut être commandée par la commande 143 pour appliquer des valeurs discrètes de puissance sur l'antenne 13. Ces puissances peuvent par exemple suivre une progression quadratique (par exemple avec les valeurs suivantes en watts : [0.5, 1, 1.5, 2, 3, 4, 5, 6, 7.5, 9, 10.5, 12] ou les valeurs suivantes : [0.5, 1, 1.5, 2, 2.5, 3, 3.5, 4, 4.5, 5, 5.5, 6, 6.5, 7.5, 8, 9, 9.5, 10.5, 11, 12] ou encore les valeurs suivantes : [0.5, 0.75, 1, 1.25, 1.5, 1.75, 2.25, 2.5, 3, 3.5, 4, 4.5, 5, 5.5, 6.25, 6.75, 7.5, 8.25, 9, 9.75, 10.5, 11.25, 12.25]) afin de disposer d'un champ radiofréquence généré par l'antenne 13 sensiblement linéaire.

La localisation de l'étiquette peut comprendre une étape préliminaire d'établissement d'une communication avec une étiquette (mode inventaire). La localisation de l'étiquette peut ensuite être mise en oeuvre à l'aide de l'identifiant de cette étiquette (mode adressé par exemple).

En se basant sur l'interrogation d'une étiquette 2 au moyen de son identification afin d'obtenir sa détection, on peut réaliser une détection de cette étiquette même si la réponse mesurée par le circuit de mesure 145 est fortement dégradée. Il est ainsi possible de limiter au maximum les cas où la puissance d'émission de l'antenne 13 est suffisante pour obtenir une réponse de l'étiquette 2, sans que la réponse de cette étiquette soit détectée par le lecteur. Un tel mode de détection s'avère avantageux, particulièrement en environnement bruité où la réponse de l'étiquette reçue sur l'antenne 13 peut être fortement perturbée.

En interrogeant au préalable une étiquette 2, on connaît le contenu de la trame de réponse de l'étiquette 2, celle-ci pouvant être définie dans une norme de communication connue d'avance. On peut par exemple effectuer un calcul de corrélation entre la trame de réponse attendue et la réponse mesurée par le circuit de mesure 145 et identifiée par le circuit de traitement 144. Le circuit de traitement 144 peut par exemple déterminer que l'étiquette est détectée si la valeur de corrélation calculée atteint un seuil prédéfini. Par conséquent, même si la réponse mesurée pour l'étiquette 2 est entachée d'erreurs (par exemple si le test de redondance cyclique est erroné), on peut malgré tout estimer que l'étiquette 2 a répondu et qu'elle est donc détectée.

Un exemple de détermination de la distance zp va être donné dans un cas particulier pour un champ électromagnétique haute fréquence. On prend comme hypothèse une fréquence de communication de 13,56 MHz, dont la longueur d'onde dans le vide est d'environ 22 m. Dans un sol humide, cette longueur d'onde sera divisée environ par 5, soit une longueur d'onde d'environ 4m. On peut donc utiliser avec une approximation raisonnable les expressions classiques des champs magnétiques statiques. En outre, on suppose que le champ magnétique généré par l'antenne 13 n'est pas perturbé par la présence du sol.

Avec cette modélisation simplifiée, le champ H appliqué sur l'étiquette 2 s'exprime par la relation suivante :

$$H = \frac{I_{ant}}{2R_{ant}} \cdot \frac{1}{\left(1+\left(\frac{z}{R_{ant}}\right)^2\right)^{3/2}} = H_0 \cdot \frac{1}{\left(1+\left(\frac{z}{R_{ant}}\right)^2\right)^{3/2}}$$

Avec H0 le champ magnétique produit par le dispositif 7 au centre de son d'antenne 13, Rant le rayon de cette antenne dans le cas d'une forme circulaire, et avec z la distance totale entre le centre de cette antenne et le centre de l'étiquette 2, soit z = (ze + zp).

La distance limite zelim de passage entre la détection de l'étiquette et sa non-détection lors d'une élévation de l'antenne du dispositif 7 est en relation avec le niveau haute fréquence de l'antenne 13, caractérisé par exemple par le champ H0 produit par l'antenne 13 en son centre. Le seuil de champ électromagnétique pour activer l'étiquette s'exprime alors par la relation suivante :

$$H_s = H_0 \cdot \frac{1}{\left(1+\left(\frac{(zp+ze_{\lim})}{R_{ant}}\right)^2\right)^{3/2}}$$

On peut ainsi tracer le niveau de champ H0 en fonction de l'élévation limite zelim, et ainsi à titre d'exemple placer des points de mesures {Hk,dk}, au moyen de la relation suivante.

$$H_k = H \cdot \left(1+\left(\frac{(zp+zek)}{R_{ant}}\right)^2\right)^{3/2}$$

Une courbe correspondante peut être tracée par une méthode des moindres carrés. Les valeurs obtenues par une telle méthode sur les paramètres Hs et zp peut s'avérer insuffisamment précise mais tout de même permettre de déterminer la qualité des mesures par l'écart des points de mesure par rapport à cette courbe. La figure 5 illustre un tel diagramme avec des paliers en niveaux de champ H0 par incréments de 0.2 mA/m c à partir de 1,1 mA/m c.

Pour chaque couple ou point de mesure de l'exemple ci-dessus (les 8 couples de valeurs {Hk,dk}), on peut chercher à estimer le champ magnétique produit par l'antenne 13 dans le sol 4 depuis la surface 5 jusqu'à une distance suffisante (par exemple 1.5m) lorsque cette antenne 13 est placée à une distance ze = dk et avec un courant dans son circuit d'antenne tel que le champ qu'elle produit au centre de son antenne soit H0 = Hk. On obtient ainsi un réseau de courbes qui se croisent en un point qui correspond à la distance recherchée sous le sol 5, avec une valeur de champ en ce point qui correspond au seuil de champ de l'étiquette 2, comme illustré à la figure 6.

Sur cette base, le procédé de détermination de la distance zp peut être le suivant. Un modèle du champ généré par l'antenne 13 à une certaine distance à l'aplomb de cette antenne peut être établi avec la relation suivante :

$$H = H_k \cdot \frac{1}{\left(1+\left(\frac{(zp+zek)}{R_{ant}}\right)^2\right)^{3/2}}$$

Sur la base des mesures mémorisées dans la mémoire 146, on rejette éventuellement initialement des mesures anormales. Pour cela, on élimine les mesures s'éloignant trop du modèle fourni par exemple par le diagramme de la figure 5. Si un trop grand nombre de mesures s'éloignent du modèle, le circuit de traitement 144 peut décider que l'estimation de la distance entre l'étiquette 2 et le sol 5 est incertaine et requérir un renouvellement de la mesure par le manipulateur.

Pour chaque mesure de limite de détection mémorisée, on calcule une estimation du champ électromagnétique généré dans le sol par le dispositif 7 lorsque son antenne est positionnée à la distance zek mémorisée dans la mémoire 146. On s'appuie pour cela sur un modèle de distribution du champ généré par l'antenne du dispositif 7. On peut également envisager de mémoriser des profils de champ électromagnétique de référence et extrapoler la distribution du champ électromagnétique recherché pour les différentes mesures par interpolation entre les profils mémorisés. Comme illustré à la figure 6, on peut déterminer les distributions du champ de l'antenne du dispositif 7 à la verticale de l'étiquette 2 pour les différentes mesures. Pour chaque mesure, on établit un diagramme du champ au niveau de l'étiquette 2 en fonction de la distance par rapport à la surface. On détermine la distance zp en déterminant la distance indiquée par l'intersection entre plusieurs de ces diagrammes. On dispose en pratique d'un nombre d'intersections égal à $N*(N-1)/2$, avec N le nombre de diagrammes ou de mesures mémorisées. Une unique intersection pourra être déterminée par interpolation entre les multiples intersections calculées, en éliminant au besoin certaines intersections présentant une trop grande dispersion par rapport aux autres.

Un tel mode de détermination de la distance zp est avantageusement indépendant des performances de l'étiquette 2 (facteur de qualité et fréquence d'accord de son antenne) et de leur évolution dans le temps en fonction du vieillissement ou des changements des conditions du sol ou du climat.

L'utilisation de fréquences de communication élevées (comprises entre 3 et 30 MHz) permet d'obtenir des temps de localisation particulièrement réduits, et donc particulièrement appréciables pour le manipulateur du dispositif. Une durée réduite de localisation est en outre avantageuse pour la précision des mesures, puisse que les mouvements du manipulateur pendant une durée de mesure réduite seront également relativement limités. Une telle plage de fréquences surmonte un préjugé technique usuel selon lequel elle serait inappropriée pour une propagation satisfaisante dans un milieu tel que la terre ou l'eau.

Dans l'exemple illustré, on utilise une mesure du courant traversant l'antenne 13 comme paramètre représentatif du champ généré par cette antenne. Tout autre paramètre représentatif peut également être utilisé, par exemple au moyen d'un magnétomètre mesurant le champ généré au niveau de l'antenne 13.

## Revendications

**1.**   Dispositif (7) de localisation d'une étiquette RFID, comprenant :

- une antenne (13) du type à couplage inductif ;
- un circuit de traitement (144) ;
- un circuit d'alimentation (142, 143) configuré pour alimenter l'antenne (13) de sorte que l'antenne génère un champ électromagnétique avec différentes valeurs d'amplitude successives;
- un dispositif (1) de détection d'une réponse de l'étiquette ;

**Caractérisé en ce que** :

- ledit dispositif de localisation est configuré pour l'évaluation d'une distance de l'étiquette RFID par rapport à une interface entre deux milieux, l'étiquette étant disposée du côté opposé au dispositif de localisation par rapport à l'interface ;
- le dispositif de localisation comprend un dispositif de détermination (147) de la distance entre l'antenne (13) du dispositif (7) et l'interface ;
- le circuit de traitement (144) est configuré pour :

- déterminer plusieurs couples incluant chacun :

- une distance déterminée entre l'antenne (13) et l'interface ; et
- une valeur de champ électromagnétique minimale générée au niveau de l'antenne pour laquelle l'étiquette est détectée à cette distance;

- évaluer la distance entre l'étiquette et l'interface en fonction des couples déterminés.

**2.** Dispositif de localisation selon la revendication 1, comprenant une mémoire contenant des relations normalisées entre une distance de l'étiquette à l'interface, et le champ électromagnétique généré par l'antenne (13) à cette distance de l'interface (5), le circuit de traitement étant configuré pour évaluer la distance (zp) entre l'étiquette (2) et l'interface à partir desdites relations mémorisées et desdites valeurs de champ électromagnétique minimales déterminées.

**3.** Dispositif de localisation (7) selon la revendication 1, dans lequel le circuit de traitement (144) est configuré pour :

- déterminer, pour plusieurs desdits couples, une relation entre une distance de l'étiquette à l'interface, et le champ électromagnétique généré par l'antenne (13) à cette distance de l'interface (5);
- évaluer la distance (zp) entre l'étiquette (2) et l'interface comme correspondant à une intersection entre plusieurs relations déterminées.

**4.** Dispositif de localisation selon la revendication 3, dans lequel le circuit de traitement est configuré pour générer ladite relation pour au moins trois desdits couples et pour évaluer la distance (zp) entre l'étiquette (2) et l'interface par interpolation entre les intersections entre lesdites relations.

**5.** Dispositif de localisation (7) selon l'une quelconque des revendications précédentes, comprenant un capteur de mesure du courant (134) traversant l'antenne (13), le circuit de traitement (144) étant configuré pour déterminer le champ électromagnétique généré au niveau de l'antenne (13) en fonction du courant mesuré.

**6.** Dispositif de localisation selon l'une quelconque des revendications précédentes, dans lequel le circuit de traitement (144) est configuré pour déterminer chacun desdits couples en commandant la génération de plusieurs valeurs de champ magnétique pour une même distance déterminée entre l'antenne (13) et l'interface (5), et en retenant pour chaque couple la plus basse valeur de champ magnétique induisant la détection de l'étiquette pour la distance déterminée correspondante.

**7.** Dispositif de localisation selon l'une quelconque des revendications 1 à 5, dans lequel le circuit de traitement (144) est configuré pour déterminer chacun desdits couples en commandant la génération d'une même valeur de champ magnétique pour différentes distances déterminées entre l'antenne (13) et l'interface (5), et en retenant pour chaque couple la valeur maximale de distance induisant la détection de l'étiquette pour la valeur de champ magnétique correspondante.

**8.** Dispositif de localisation selon l'une quelconque des revendications 1 à 5, dans lequel le circuit de traitement (144) est configuré pour déterminer chacun desdits couples en commandant, durant une variation de la distance entre l'antenne (13) et l'interface (5) :

- lorsqu'une réponse de l'étiquette est détectée, en commandant la génération des valeurs de champ successives décroissantes jusqu'à détecter l'absence de réponse de l'étiquette ;
- lorsqu'une absence de réponse de l'étiquette est détectée, en commandant la génération des valeurs de champ successives croissantes jusqu'à détecter une réponse de l'étiquette.

**9.** Dispositif de localisation selon l'une quelconque des revendications 6 à 8, comprenant une interface de communication avec l'utilisateur (6), le circuit de traitement (124) étant configuré pour émettre des requêtes de déplacement de l'antenne (13) par l'intermédiaire de cette interface de communication.

**10.** Dispositif de localisation selon l'une quelconque des revendications précédentes, dans lequel l'antenne (13) et le circuit d'alimentation (142) sont configurés pour générer un champ électromagnétique présentant une fréquence comprise entre 3 et 30 MHz.

**11.** Dispositif de localisation selon l'une quelconque des revendications précédentes, dans lequel le circuit de traitement (144) comporte un mode de localisation de la position de l'étiquette (2) sur l'interface (5) selon une normale à cette interface, mode de localisation dans lequel, pour une même distance entre l'antenne (13) et l'interface, le circuit de traitement (144) est configuré pour :

- commander la génération d'une même valeur de champ magnétique en l'absence de détection de l'étiquette ;
- commander la réduction de la valeur du champ magnétique généré lors d'une détection de l'étiquette.

**12.** Dispositif de localisation selon les revendications 9 et 11, dans lequel le circuit de traitement (144) est configuré pour indiquer une détection de l'étiquette dans le mode de localisation par l'intermédiaire de ladite interface de communication.

**13.** Dispositif de localisation selon la revendication 11 ou 12, dans lequel le circuit de traitement (144) est configuré pour mémoriser la plus faible valeur de champ magnétique pour laquelle l'étiquette est détectée dans le mode de localisation.

**14.** Dispositif de localisation selon la revendication 13, dans lequel le circuit de traitement, lorsqu'il initie la détermination desdits couples, commande la génération d'un champ magnétique correspondant à la plus faible valeur de champ magnétique mémorisée dans le mode de localisation.

**15.** Dispositif de localisation selon l'une quelconque des revendications précédentes, dans lequel ledit dispositif de détermination inclut un dispositif de mesure (147) de la distance entre l'antenne (13) du dispositif (7) et l'interface.

**16.** Procédé de localisation d'une étiquette RFID (2) par rapport à une interface (5) entre deux milieux, l'étiquette étant disposée du côté opposé à un dispositif d'évaluation (7) par rapport à l'interface, le procédé comprenant :

- la génération d'un champ électromagnétique avec différentes valeurs d'amplitude successives avec une antenne (13) du type à couplage inductif du dispositif d'évaluation (7) ;
- la détermination (147) de la distance entre l'antenne (13) et l'interface (5) durant la génération du champ;
- la détermination de la détection ou non d'une réponse de l'étiquette ;
- la détermination de plusieurs couples incluant chacun :

  - une distance déterminée entre l'antenne (13) et l'interface (5) ; et
  - une valeur de champ électromagnétique minimale générée au niveau de l'antenne pour laquelle l'étiquette est détectée à cette distance;

- l'évaluation de la distance entre l'étiquette et l'interface en fonction des couples déterminés.

**17.** Procédé de localisation d'une étiquette RFID (2) selon la revendication 16, dans lequel ladite détermination de la distance entre l'antenne et l'interface est effectuée par une mesure de la distance entre l'antenne et l'interface.

**Patentansprüche**

**1.** Vorrichtung (7) zur Ortung eines RFID-Etiketts, welche umfasst:

- eine Antenne (13) des Typs mit induktiver Kopplung;
- eine Verarbeitungsschaltung (144);
- eine Stromversorgungsschaltung (142, 143), die dafür ausgelegt ist, die Antenne (13) zu versorgen, derart, dass die Antenne ein elektromagnetisches Feld mit aufeinander folgenden verschiedenen Amplitudenwerten erzeugt;
- eine Vorrichtung (1) zur Erfassung einer Antwort des Etiketts;
**dadurch gekennzeichnet, dass**
- die Ortungsvorrichtung für die Ermittlung eines Abstands des RFID-Etiketts in Bezug auf eine Grenzfläche zwischen zwei Medien ausgelegt ist, wobei das Etikett auf der Seite angeordnet ist, die der Ortungsvorrichtung in Bezug auf die Grenzfläche gegenüberliegt;
- die Ortungsvorrichtung eine Vorrichtung zur Bestimmung (147) des Abstands zwischen der Antenne (13) der Vorrichtung (7) und der Grenzfläche umfasst;
- die Verarbeitungsschaltung (144) dafür ausgelegt ist:

  - mehrere Paare zu bestimmen, die jeweils enthalten:

    - einen zwischen der Antenne (13) und der Grenzfläche bestimmten Abstand; und
    - einen minimalen Wert des an der Antenne erzeugten elektromagnetischen Feldes, für den das Etikett bei diesem Abstand erfasst wird;

- den Abstand zwischen dem Etikett und der Grenzfläche in Abhängigkeit von den bestimmten Paaren zu ermitteln.

2. Ortungsvorrichtung nach Anspruch 1, welche einen Speicher umfasst, der standardisierte Beziehungen zwischen einem Abstand vom Etikett zur Grenzfläche und dem elektromagnetischen Feld, das von der Antenne (13) bei diesem Abstand von der Grenzfläche (5) erzeugt wird, enthält, wobei die Verarbeitungsschaltung dafür ausgelegt ist, den Abstand (zp) zwischen dem Etikett (2) und der Grenzfläche anhand dieser gespeicherten Beziehungen und der bestimmten minimalen Werte des elektromagnetischen Feldes zu ermitteln.

3. Ortungsvorrichtung (7) nach Anspruch 1, wobei die Verarbeitungsschaltung (144) ausgelegt ist zum:

- Bestimmen, für mehrere der Paare, einer Beziehung zwischen einem Abstand vom Etikett zur Grenzfläche und dem elektromagnetischen Feld, das von der Antenne (13) bei diesem Abstand von der Grenzfläche (5) erzeugt wird;
- Ermitteln des Abstands (zp) zwischen dem Etikett (2) und der Grenzfläche als einer Überschneidung zwischen mehreren bestimmten Beziehungen entsprechend.

4. Ortungsvorrichtung nach Anspruch 3, wobei die Verarbeitungsschaltung dafür ausgelegt ist, die Beziehung für wenigstens drei der Paare zu erzeugen und den Abstand (zp) zwischen dem Etikett (2) und der Grenzfläche durch Interpolation zwischen den Überschneidungen zwischen den Beziehungen zu ermitteln.

5. Ortungsvorrichtung (7) nach einem der vorhergehenden Ansprüche, welche einen Sensor zur Messung des Stroms (134) umfasst, der durch die Antenne (13) fließt, wobei die Verarbeitungsschaltung (144) dafür ausgelegt ist, das an der Antenne (13) erzeugte elektromagnetische Feld in Abhängigkeit von dem gemessenen Strom zu bestimmen.

6. Ortungsvorrichtung nach einem der vorhergehenden Ansprüche, wobei die Verarbeitungsschaltung (144) dafür ausgelegt ist, jedes der Paare zu bestimmen, indem sie die Erzeugung mehrerer Werte des Magnetfeldes für ein und denselben bestimmten Abstand zwischen der Antenne (13) und der Grenzfläche (5) steuert und indem sie für jedes Paar den niedrigsten Wert des Magnetfeldes verwendet, der die Erfassung des Etiketts für den entsprechenden bestimmten Abstand bewirkt.

7. Ortungsvorrichtung nach einem der Ansprüche 1 bis 5, wobei die Verarbeitungsschaltung (144) dafür ausgelegt ist, jedes der Paare zu bestimmen, indem sie die Erzeugung ein und desselben Wertes des Magnetfeldes für verschiedene bestimmte Abstände zwischen der Antenne (13) und der Grenzfläche (5) steuert und indem sie für jedes Paar den maximalen Wert des Abstands verwendet, der die Erfassung des Etiketts für den entsprechenden Wert des Magnetfeldes bewirkt.

8. Ortungsvorrichtung nach einem der Ansprüche 1 bis 5, wobei die Verarbeitungsschaltung (144) dafür ausgelegt ist, jedes der Paare zu bestimmen, indem sie während einer Änderung des Abstands zwischen der Antenne (13) und der Grenzfläche (5):

- wenn eine Antwort des Etiketts erfasst wird, die Erzeugung der abnehmenden aufeinander folgenden Werte des Feldes steuert, bis das Ausbleiben einer Antwort des Etiketts erfasst wird;
- wenn ein Ausbleiben einer Antwort des Etiketts erfasst wird, die Erzeugung der zunehmenden aufeinander folgenden Werte des Feldes steuert, bis eine Antwort des Etiketts erfasst wird.

9. Ortungsvorrichtung nach einem der Ansprüche 6 bis 8, welche eine Schnittstelle zur Kommunikation mit dem Benutzer (6) umfasst, wobei die Verarbeitungsschaltung (124) dafür ausgelegt ist, über diese Kommunikationsschnittstelle Anforderungen zur Verlagerung der Antenne (13) zu senden.

10. Ortungsvorrichtung nach einem der vorhergehenden Ansprüche, wobei die Antenne (13) und die Stromversorgungsschaltung (142) dafür ausgelegt sind, ein elektromagnetisches Feld zu erzeugen, das eine Frequenz zwischen 3 und 30 MHz aufweist.

11. Ortungsvorrichtung nach einem der vorhergehenden Ansprüche, wobei die Verarbeitungsschaltung (144) eine Betriebsart der Ortung der Position des Etiketts (2) auf der Grenzfläche (5) entlang einer Normalen zu dieser Grenzfläche aufweist, wobei in dieser Ortungsbetriebsart für ein und denselben Abstand zwischen der Antenne (13) und der Grenzfläche die Verarbeitungsschaltung (144) dafür ausgelegt ist:

- bei nicht vorhandener Erfassung des Etiketts die Erzeugung ein und desselben Magnetfeldwertes zu steuern;
- bei einer Erfassung des Etiketts die Verringerung des Wertes des Magnetfeldes zu steuern.

12. Ortungsvorrichtung nach den Ansprüchen 9 und 11, wobei die Verarbeitungsschaltung (144) dafür ausgelegt ist, eine Erfassung des Etiketts in der Ortungsbetriebsart über die Kommunikationsschnittstelle anzuzeigen.

13. Ortungsvorrichtung nach Anspruch 11 oder 12, wobei die Verarbeitungsschaltung (144) dafür ausgelegt ist, den schwächsten Wert des Magnetfeldes zu speichern, für den das Etikett in der Ortungsbetriebsart erfasst wird.

14. Ortungsvorrichtung nach Anspruch 13, wobei die Verarbeitungsschaltung, wenn sie die Bestimmung der Paare einleitet, die Erzeugung eines Magnetfeldes steuert, das dem in der Ortungsbetriebsart gespeicherten schwächsten Wert des Magnetfeldes entspricht.

15. Ortungsvorrichtung nach einem der vorhergehenden Ansprüche, wobei die Vorrichtung zur Bestimmung eine Vorrichtung zur Messung (147) des Abstands zwischen der Antenne (13) der Vorrichtung (7) und der Grenzfläche einschließt.

16. Verfahren zur Ortung eines RFID-Etiketts (2) in Bezug auf eine Grenzfläche (5) zwischen zwei Medien, wobei das Etikett auf der Seite angeordnet ist, die einer Ermittlungsvorrichtung (7) in Bezug auf die Grenzfläche gegenüberliegt, wobei das Verfahren umfasst:

- die Erzeugung eines elektromagnetischen Feldes mit aufeinander folgenden verschiedenen Amplitudenwerten mit einer Antenne (13) des Typs mit induktiver Kopplung der Ermittlungsvorrichtung (7);
- die Bestimmung (147) des Abstands zwischen der Antenne (13) und der Grenzfläche (5) während der Erzeugung des Feldes;
- die Bestimmung der Erfassung oder Nichterfassung einer Antwort des Etiketts;
- die Bestimmung mehrerer Paare, die jeweils enthalten:

- einen zwischen der Antenne (13) und der Grenzfläche (5) bestimmten Abstand; und
- einen minimalen Wert des an der Antenne erzeugten elektromagnetischen Feldes, für den das Etikett bei diesem Abstand erfasst wird;

- die Ermittlung des Abstands zwischen dem Etikett und der Grenzfläche in Abhängigkeit von den bestimmten Paaren.

17. Verfahren zur Ortung eines RFID-Etiketts (2) nach Anspruch 16, wobei die Bestimmung des Abstands zwischen der Antenne und der Grenzfläche durch eine Messung des Abstands zwischen der Antenne und der Grenzfläche durchgeführt wird.

**Claims**

1. Device (7) for locating an RFID tag, comprising:

- an antenna (13) of the inductive coupling type;
- a processing circuit (144);
- an energizing circuit (142, 143) configured to energize the antenna (13) so that the antenna generates an electromagnetic field with various successive amplitude values;
- a device (1) for detecting a response from the tag;

**characterized in that**:

- said locating device is configured for the evaluation of a distance of the RFID tag with respect to an interface between two media, the tag being disposed on the side opposite from the locating device with respect to the interface;
- the locating device comprises a device (147) for determining the distance between the antenna (13) of the device (7) and the interface;
- the processing circuit (144) is configured to:

- determine several pairs each including:

- a distance determined between the antenna (13) and the interface; and
- a minimum electromagnetic field value generated at the level of the antenna for which the tag is detected at this distance;

- evaluate the distance between the tag and the interface as a function of the pairs determined.

2. Locating device according to Claim 1, comprising a memory containing normalized relations between a distance of the tag from the interface, and the electromagnetic field generated by the antenna (13) at this distance from the interface (5), the processing circuit being configured to evaluate the distance (zp) between the tag (2) and the interface on the basis of said stored relations and said minimum determined values of electromagnetic field.

3. Locating device (7) according to Claim 1, in which the processing circuit (144) is configured to:

- determine, for several of said pairs, a relation between a distance of the tag from the interface, and the electromagnetic field generated by the antenna (13) at this distance from the interface (5);
- evaluate the distance (zp) between the tag (2) and the interface as corresponding to an intersection between several determined relations.

4. Locating device according to Claim 3, in which the processing circuit is configured to generate said relation for at least three of said pairs and to evaluate the distance (zp) between the tag (2) and the interface by interpolation between the intersections between said relations.

5. Locating device (7) according to any one of the preceding claims, comprising a sensor for measuring the current (134) passing through the antenna (13), the processing circuit (144) being configured to determine the electromagnetic field generated at the level of the antenna (13) as a function of the measured current.

6. Locating device according to any one of the preceding claims, in which the processing circuit (144) is configured to determine each of said pairs by instructing the generation of several values of magnetic field for one and the same distance determined between the antenna (13) and the interface (5), and by retaining for each pair the lowest magnetic field value inducing the detection of the tag for the corresponding determined distance.

7. Locating device according to any one of Claims 1 to 5, in which the processing circuit (144) is configured to determine each of said pairs by instructing the generation of one and the same magnetic field value for various distances determined between the antenna (13) and the interface (5), and by retaining for each pair the maximum distance value inducing the detection of the tag for the corresponding magnetic field value.

8. Locating device according to any one of Claims 1 to 5, in which the processing circuit (144) is configured to determine each of said pairs by instructing, during a variation of the distance between the antenna (13) and the interface (5):

- when a response from the tag is detected, by instructing the generation of the decreasing successive field values until the absence of response from the tag is detected;
- when an absence of response from the tag is detected, by instructing the generation of the increasing successive field values until a response from the tag is detected.

9. Locating device according to any one of Claims 6 to 8, comprising an interface for communication with the user (6), the processing circuit (124) being configured to emit requests for displacement of the antenna (13) by way of this communication interface.

10. Locating device according to any one of the preceding claims, in which the antenna (13) and the energizing circuit (142) are configured to generate an electromagnetic field exhibiting a frequency lying between 3 and 30 MHz.

11. Locating device according to any one of the preceding claims, in which the processing circuit (144) comprises a location mode of the position of the tag (2) on the interface (5) according to a normal to this interface, in which location mode, for one and the same distance between the antenna (13) and the interface, the processing circuit (144) is configured to:

- instruct the generation of one and the same magnetic field value in the absence of detection of the tag;
- instruct the reduction in the value of the magnetic field generated during a detection of the tag.

12. Locating device according to Claims 9 and 11, in which the processing circuit (144) is configured to indicate a detection of the tag in the location mode by way of said communication interface.

13. Locating device according to Claim 11 or 12, in which the processing circuit (144) is configured to store the lowest magnetic field value for which the tag is detected in the location mode.

14. Locating device according to Claim 13, in which the processing circuit, when it initiates the determination of said pairs, instructs the generation of a magnetic field corresponding to the lowest magnetic field value stored in the location mode.

15. Locating device according to any one of the preceding claims, in which said determining device includes a device (147) for measuring the distance between the antenna (13) of the device (7) and the interface.

16. Method for locating an RFID tag (2) with respect to an interface (5) between two media, the tag being disposed on the side opposite from an evaluating device (7) with respect to the interface, the method comprising:

- the generation of an electromagnetic field with various successive amplitude values with an antenna (13) of the inductive coupling type of the evaluating device (7);
- the determination (147) of the distance between the antenna (13) and the interface (5) during the generation of the field;
- the determination of the detection or otherwise of a response from the tag;
- the determination of several pairs each including:

- a distance determined between the antenna (13) and the interface (5); and
- a minimum electromagnetic field value generated at the level of the antenna for which the tag is detected at this distance;

- the evaluation of the distance between the tag and the interface as a function of the pairs determined.

17. Method for locating an RFID tag (2) according to claim 16, in which said determination of the distance between the antenna and the interface is performed by a measurement of the distance between the antenna and the interface.

Fig. 1

Fig. 2

Fig. 3

Fig. 4

Fig. 5

Fig. 6

## RÉFÉRENCES CITÉES DANS LA DESCRIPTION

**Documents brevets cités dans la description**

- JP 2005181111 B
- US 20070290846 A
- US 20110181289 A
- FR 2961354